# DEMANDE DE BREVET EUROPEEN

(11) **EP 4 063 463 A1**
(43) Date de publication de la demande: **28.09.2022**
(21) Numéro de dépôt: 22163156.7
(22) Date de dépôt: 21.03.2022
(51) Int. Cl.: C09D 175/02

(54) **REVÊTEMENT ANTI-ADHÉRENT DE SURFACES MÉTALLIQUES**

(30) Priorité: 23.03.2021 FR 2102907
(71) Demandeur: Kemica Coatings, 28630 Mignières (FR)
(72) Inventeur: MASSARD, René, 28630 MIGNIÈRES (FR); TELITEL, Sofia, 28630 MIGNIÈRES (FR); ALIOUI, Samy, 28630 MIGNIÈRES (FR)
(74) Mandataire: Cabinet Beau de Loménie

(57) **Abrégé**

La présente invention concerne l'utilisation d'une résine polyurée comme revêtement anti-adhérent d'un élément métallique. Elle concerne en outre un procédé de traitement d'un élément métallique comprenant les étapes suivantes :
- a) l'application d'une couche liquide de prépolymère de résine polyurée monocomposante sans solvant sur au moins une surface de l'élément métallique ;
- b) la réticulation de la résine
- c) la récupération d'un élément métallique dont au moins une des surfaces est revêtue d'un film en résine polyurée.

Elle concerne enfin un élément métallique revêtu d'un film d'une résine polyurée.

## Description

### Domaine Technique

La présente invention concerne le revêtement des éléments métalliques tels que les coffrages métalliques, en particulier les banches, panneaux ou assemblages de structures en métal, plus particulièrement en acier tel que l'acier inoxydable, destinés à servir au coffrage d'ouvrages ou d'objets moulés en béton. Ces éléments de coffrages sont légers, permettant facilement de réaliser des structures aux formes et assemblages complexes.

### Technique antérieure

Les surfaces coffrantes métalliques sont actuellement traitées par aspersion d'huile de décoffrage pour permettre le démoulage du béton. Les inconvénients majeurs sont les suivants:
- pollution des sols (en France, près de 20000 tonnes d'huile sont répandues dans la nature, qui ensuite pollueront les nappes phréatiques. En Europe : plus de 100000 tonnes/an, soit plus de 1 000 000 tonnes sur 10 ans) ;
- les bétons sont souillés par l'huile, ce qui nuit à l'adhérence des peintures et enduits, et nécessite un traitement pour éliminer l'huile qui a imprégnée le béton ;
- en cas de béton brut architectonique, la couleur n'est pas uniforme en fonction de l'imprégnation de l'huile dans le béton car l'huile est une des causes des phénomènes de bullage du béton.

Les inventeurs se sont aperçus de façon surprenante qu'il était possible d'éviter l'utilisation d'huile de décoffrage en recouvrant les surfaces métalliques d'une résine polyurée sans solvant monocomposante qui présente la fonction de revêtement anti-adhérent du béton.

Les avantages de l'utilisation de cette résine sont en particulier les suivants :
- démoulage aisé du béton ;
- béton obtenu uniformément blanc ;
- protection anti corrosion des surfaces métalliques ;
- aucune pollution de l'environnement, ni COV ;
- minimum de 100 cycles sans entretien ;
- facile à rénover par simple réapplication d'une nouvelle couche sur l'existante après léger ponçage superficiel.

Par ailleurs les inventeurs se sont également aperçus que la propriété antiadhérence de la résine polyurée pour le béton était également valable pour d'autres matériaux tels que le ciment, l'argile, les enduits, les autres types de résines (polyuréthanes, époxy par exemple). La résine polyurée peut donc non seulement être appliquée sur des éléments métalliques destinés au coffrage mais également sur tout autre type d'éléments métalliques qui pourraient être en contact avec ces matériaux, tels que les échafaudages pour en faciliter leur nettoyage complet, les silos ou trémies tels que les silos à ciments, les toupies à bétons (en particulier leur revêtement interne, la goulotte et l'arrière de la toupie qui sont facilement salies par le béton), les bandes transporteuses et les sols d'atelier des préfabricateurs de béton.

### Exposé de l'invention

La présente invention concerne donc l'utilisation d'une résine polyurée comme revêtement anti-adhérent, en particulier du béton, d'un élément métallique, en particulier destiné au coffrage. De façon avantageuse, la résine polyurée est une résine monocomposante, plus particulièrement durcissant à l'aide de l'humidité, encore plus particulièrement sans solvant, avantageusement ayant une adhérence sur métal supérieure à 15 MPa selon la norme EN 1542. De façon particulièrement avantageuse, la résine est aromatique, encore plus particulièrement obtenue à partir d'un prépolymère isocyanate aromatique, par exemple de type MDI (diisocyanate de diphényl méthane). Elle peut être disponible commercialement sous la dénomination KEBANCHE chez la société

### KEMICA COATINGS.

De façon encore plus avantageuse, la résine selon l'invention ne contient pas d'huile de silicone. En particulier la résine polyurée selon l'invention n'est pas une résine polyuréesilazane.

De façon avantageuse l'épaisseur du revêtement est comprise entre 60 µm et 1000µm, en particulier elle est de 750 µm. Le revêtement peut consister en une ou plusieurs couches de la résine polyurée, plus avantageusement en 2 ou 3 couches, en particulier 3 couches.

Dans un mode de réalisation avantageux, le revêtement est anti-adhérent du béton, du ciment, de l'argile, des enduits, des autres types de résines (polyuréthanes, époxy par exemple), plus avantageusement du béton, en particulier du béton armé.

Avantageusement l'élément métallique est destiné au coffrage. En particulier il s'agit d'un panneau ou d'un assemblage de structure métallique, plus particulièrement d'une banche, qui peut avoir une forme ou un assemblage varié ou complexe.

Il peut également s'agir d'échafaudages, de silos ou trémies tels que les silos à ciments, les toupies à bétons (en particulier l'intérieur de la toupie, la goulotte et l'arrière de la toupie qui sont facilement salies par le béton), de bandes transporteuses ou des sols d'atelier des préfabricateurs de béton.

L'élément métallique peut être en acier tel que l'acier inoxydable.

De façon particulièrement avantageuse, l'élément métallique est destiné au coffrage et n'est pas traité par une huile de décoffrage.

Dans un mode particulièrement avantageux, l'élément métallique n'a subi aucun traitement avant son revêtement.

La résine polyurée selon l'invention peut être utilisée uniquement sur les surfaces de l'élément métalliques destinées à être en contact avec le matériau dont on veut éviter l'adhérence, tel que le béton, en particulier le béton armé, le ciment, l'argile, les enduits, les autres types de résines (polyuréthanes, époxy par exemple).

La résine polyurée selon l'invention peut également être utilisée sur toutes les surfaces de l'élément métallique, y compris celles qui ne sont pas destinées à être en contact avec le matériau dont on veut éviter l'adhérence.

La présente invention concerne en outre un procédé de traitement d'un élément métallique, en particulier destiné au coffrage, comprenant les étapes suivantes:
- a) l'application d'une couche liquide de prépolymère de résine polyurée monocomposante sans solvant sur au moins une des surfaces de l'élément métallique ;
- b) la réticulation de la résine ;
- c) la récupération d'un élément métallique dont au moins une des surfaces est revêtue d'un film en résine polyurée.

Les étapes a) et b) peuvent être réitérées plusieurs fois en fonction du nombre de couches de résine que l'on souhaite appliquer et donc de l'épaisseur totale du film que l'on souhaite obtenir sur l'élément métallique à l'étape c).

L'élément métallique, en particulier destiné au coffrage, la résine polyurée et son prépolymère sont tels que décrits ci-dessus. Plus particulièrement la viscosité du prépolymère de la résine polyurée monocomposante sans solvant est de 280 MPa.s à 30°C, mesurée par le Viscosimètre Brookfield DV-E de Labomat. Avantageusement l'élément métallique n'est pas traité par une huile de décoffrage, de façon encore plus avantageuse il n'a subi aucun traitement préalable avant l'étape a) du procédé.

De façon avantageuse l'étape b) est mise en œuvre par contact avec l'humidité de l'air, en particulier pendant au moins 3 heures à 20°C, plus particulièrement lorsque l'épaisseur de la couche de l'étape a) est supérieure ou égale à 250 µm, pendant au moins 4 heures à 20°C, encore plus particulièrement pendant au moins 5 heures à 20°C.

Dans un mode de réalisation avantageux, le film de l'étape c) a une épaisseur de 60 µm à 1000 µm, en particulier de 750 µm, avantageusement obtenu en une ou plusieurs couches successives, en particulier en 1, 2 ou 3 couches successives.

Dans un autre mode de réalisation avantageux, l'épaisseur de la couche de l'étape a) est de 60 µm à 250 µm Plus particulièrement la température d'application de l'étape a) est supérieure à - 5°C. La teneur appliquée peut être d'au moins 150 g/m² de surface, plus particulièrement comprise entre 150 et 250 g/m² de surface, encore plus particulièrement de 250 g/m² de surface

Avantageusement la au moins une surface, en particulier les surfaces, de l'élément métallique sur laquelle est appliquée la couche lors de l'étape a) est destinée à être en contact avec le matériau dont on cherche à diminuer l'adhérence, en particulier le béton, le ciment, l'argile, les enduits, les autres types de résines (polyuréthanes, époxy par exemple), plus avantageusement le béton, en particulier le béton armé, de façon avantageuse la couche est appliquée sur toutes les surfaces de cet élément, même celles n'étant pas destinées à être en contact avec ce matériau.

Dans un mode de réalisation avantageux, l'étape a) comprend, en particulier est constituée par, l'application manuelle au rouleau ou à l'aide d'une raclette crantée de la couche de prépolymère de résine polyurée sur la au moins une surface de l'élément métallique.

Dans un autre mode de réalisation avantageux, l'étape a) comprend, en particulier est constituée par, l'application mécanique par projection à l'aide d'une pompe monocomposant haute pression (HP) de la couche de prépolymère de résine polyurée sur la au moins une surface de l'élément métallique.

Dans encore un autre mode de réalisation avantageux, l'étape a) comprend, en particulier est constituée par, l'application mécanique par projection électrostatique à l'aide d'une pompe monocomposant bassepression (BP) de la couche de prépolymère de résine polyurée sur la au moins une surface de l'élément métallique.

La présente invention concerne enfin un élément métallique, en particulier destiné au coffrage, revêtu d'un film d'une résine polyurée, avantageusement dont l'épaisseur du film est de 60µm à 1000µm, en particulier de 750 µm.

L'élément métallique, en particulier destiné au coffrage, et la résine polyurée sont tels que décrits ci-dessus. Avantageusement l'élément métallique n'a pas été traité par une huile de décoffrage, de façon encore plus avantageuse n'a subi aucun traitement.

L'invention sera mieux comprise à la lecture de la description de l'exemple qui suit qui est donné à titre indicatif non limitatif.

### Exemple : Réalisation du revêtement anti adhérent d'une banche en acier inoxydable

Le matin 9h application manuelle au rouleau à température ambiante d'une couche de 250µm de la résine KEBANCHE commercialisée par la société KEMICA COATINGS sur toutes les surfaces de la banche en une teneur de 250 g/m² de surface. :
A midi, application au rouleau à température ambiante d'une 2ème couche de 250µm sur la première couche. A 16h application au rouleau à température ambiante d'une 3ème couche de 250µm sur la deuxième couche. L'épaisseur totale de revêtement obtenue est de 750µm.

Le lendemain coulée du béton dans les banches. Le surlendemain, décoffrage. Aucun béton n'adhère à la banche et le décoffrage est donc facilement réalisé.

## Revendications

1. Utilisation d'une résine polyurée monocomposante sans solvant durcissant à l'aide de l'humidité comme revêtement anti-adhérent, en particulier du béton, d'un élément métallique, en particulier destiné au coffrage.

2. Utilisation selon la revendication 1 **caractérisée en ce que** l'épaisseur du revêtement est comprise entre 60 µm et 1000 µm.

3. Utilisation selon l'une quelconque des revendications 1 ou 2, **caractérisé en ce que** l'élément métallique est destiné au coffrage et est avantageusement un panneau ou un assemblage de structure métallique.

4. Utilisation selon l'une quelconque des revendications 1 à 3, **caractérisé en ce que** l'élément métallique est destiné au coffrage et n'est pas traité par une huile de décoffrage.

5. Procédé de traitement d'un élément métallique, en particulier destiné au coffrage, comprenant les étapes suivantes :
- a) l'application d'une couche liquide de prépolymère de résine polyurée monocomposante sans solvant sur au moins une surface de l'élément métallique ;
- b) la réticulation de la résine par contact avec l'humidité de l'air ;
- c) la récupération d'un élément métallique dont au moins une des surfaces est revêtue d'un film en résine polyurée.

6. Procédé selon la revendication 5, **caractérisé en ce que** l'élément métallique est destiné au coffrage et est avantageusement un panneau ou un assemblage de structure métallique.

7. Procédé selon l'une quelconque des revendications 5 ou 6, **caractérisé en ce que** l'élément métallique n'est pas traité par une huile de décoffrage.

8. Procédé selon l'une quelconque des revendications 5 à 7, **caractérisé en ce que** le film de l'étape c) a une épaisseur de 60 µm à 1000 µm, avantageusement obtenu en une ou plusieurs couches successives.

9. Procédé selon l'une quelconque des revendications 5 à 8, **caractérisé en ce que** l'élément métallique est destiné au coffrage et **en ce que** la surface de l'élément métallique sur laquelle est appliqué la couche lors de l'étape a) est destinée à être en contact avec le béton.

10. Procédé selon l'une quelconque des revendications 5 à 9, **caractérisé en ce que** l'étape a) comprend l'application manuelle au rouleau ou à l'aide d'une raclette crantée de couche de prépolymère de résine polyurée sur la surface de l'élément métallique.

11. Procédé selon l'une quelconque des revendications 5 à 9, **caractérisé en ce que** l'étape a) comprend l'application mécanique par projection à l'aide d'une pompe monocomposant haute pression de couche de prépolymère de la résine polyurée sur la surface de l'élément métallique.

12. Procédé selon l'une quelconque des revendications 5 à 9, **caractérisé en ce que** l'étape a) comprend l'application mécanique par projection électrostatique à l'aide d'une pompe monocomposant bassepression de la couche de prépolymère de résine polyurée sur la surface de l'élément métallique.

13. Elément métallique, en particulier destiné au coffrage revêtu d'un film d'une résine polyurée monocomposante sans solvant durcissant à l'aide de l'humidité telle que définie dans la revendication 1, avantageusement dont l'épaisseur du film est de 60µm à 1000µm.

14. Elément métallique selon la revendication 13 **caractérisé en ce qu'**il s'agit d'un panneau ou d'un assemblage de structure métallique.
